# EUROPÄISCHE PATENTSCHRIFT

(11) **EP 0 611 446 B1**
(45) Veröffentlichungstag und Bekanntmachung des Hinweises auf die Patenterteilung: **13.01.1999**
(21) Anmeldenummer: 93919281.1
(22) Anmeldetag: 06.09.1993
(51) Int. Cl.: G01N 1/28, F25D 3/10, F17C 3/08

(54) **VORRICHTUNG ZUR ENTWÄSSERUNG UND/ODER EINBETTUNG VON PROBEN**
DEVICE FOR DEHYDRATING AND/OR EMBEDDING SAMPLES
DISPOSITIF POUR LA DESHYDRATATION ET/OU L'ENROBAGE D'ECHANTILLONS

(30) Priorität: 08.09.1992 AT 1787/92
(43) Veröffentlichungstag der Anmeldung: 24.08.1994
(73) Patentinhaber: LEICA AG, A-1170 Wien (AT)
(72) Erfinder: SITTE, Hellmuth, A-6100 Seefeld in Tirol (AT); NEUMANN, Klaus, D-66450 Bexbach-Saar (DE); EDELMANN, Ludwig,Dr., D-66424 Homburg-Saar (DE); HÄSSIG, Helmut, D-66424 Homburg-Saar (DE); LANG, Anton, A-1160 Wien (AT); KLEBER, Heinrich, A-1210 Wien/Strebersdorf (AT)
(74) Vertreter: Stamer, Harald, Dipl.-Phys.
(86) Internationale Anmeldenummer: EP9302408
(87) Internationale Veröffentlichungsnummer: WO9405995

(56) Entgegenhaltungen:
- DE-A- 3 610 748
- GIT LABOR-MEDIZIN Nr. 5 , 1987 , DARMSTADT Seiten 199 - 208 H. SITTE ET AL. 'EIN INSTRUMENT ZU KRYOSUBSTITUTION UND TIEFTEMPERATUR-EINBETTUNG' in der Anmeldung erwähnt

## Beschreibung

Die Erfindung betrifft eine Vorrichtung zur Entwässerung und/oder Einbettung von Proben, gemäß dem Oberbegriff des Patentanspruchs 1.

Zur raschen "Immobilisierung" werden Proben für mikroskopische oder elektronenmikroskopische Untersuchungen häufig extrem rasch eingefroren. Eine Einrichtung zum raschen Einfrieren einer Probe ist aus der DE 36 10 748 A1 bekannt. Die Einrichtung weist eine tiefgekühlte, hochglanzpolierte Festkörperfläche auf, die als Metallspiegel ausgebildet und in einem Behälter mit flüssigem Stickstoff angeordnet ist. Zum "Schockgefrieren" wird bei dieser Einrichtung die Probe mit einem federnd vorgespannten Injektorstab auf den Metallspiegel aufgebracht.

Anschließend wird das in den Proben enthaltene Eis bei Temperaturen zwischen -80°C und -120°C entweder durch polare Lösungsmittel (z. B. Methanol: *"Kryosubstitution",* vgl. hierzu u.a. Patentschriften DE 29 44 484 C2 oder DE 34 25 744 C2 bzw. H.Sitte, ZEISS MEM 3, 25-31, 1984 oder H.Sitte et al, GIT Labor-Medizin, 10, 199-208, 1987, dortselbst weiterführende Literatur) oder im Vakuum bzw. durch Reduktion des Wasserdampf-Partialdruckes ("*Gefriertrockung*": vgl. hierzu u.a.Patentschrift: DE 27 39 796 bzw. L.Edelmann, Mikroskopie, Wien, 35, 31-36, 1979 sowie L.Edelmann, Scanning Electron Microscopy, IV,1337-1356, 1986, dortselbst weiterführende Literatur) weitgehend entfernt, so daß anschließend die getrockenten Proben in Paraffin oder in einem geeigneten Kunststoff für eine nachfolgende Schnittpräparation eingebettet werden können.

Die aus H.Sitte et al, GIT Labor-Medizin, 5, 199-208, 1987 bekannte Kryosubstitutionseinrichtung weist einen Substitutionseinsatz auf, der aus einer Aufnahmehülse und einem austauschbaren Einsatzbehälter besteht. Der Substitutionseinsatz wird von einer metallischen Kühlfläche gekühlt. Die Kühlfläche ist ortsfest in einem mit Flüssigstickstoff gefüllten Dewargefäß angeordnet. Die Aufnahmehülse ist über ein Metallrohr mit dem Zylinder fest verbunden. Ferner sind Substitutionsbehälter vorgesehen, die der Aufnahme der Objekte dienen und innerhalb der Einsatzbehälter angeordnet sind. Mit dieser Einrichtung lassen sich jedoch keine unterschiedlichen Verfahren durchführen.

Eine Alternative zu diesem Verfahren bietet die *"PLT-Methode"* (PLT steht für "Progressive Lowering of Temperature; vgl. hierzu u.a. E. Carlemalm et al, J. Microscopy, Oxford 126, 123-143, 1982; dortselbst weitere Literaturhinweise), bei der die Proben zunächst chemisch, beispielsweise in einer Aldehydlösung fixiert werden und anschließend während ihrer Entwässerung in polaren Medien (z. B. Azeton oder Methanol) jeweils in jenem Umfang abgekühlt werden, in welchem der Gefrierpunkt der Mischung abnimmt. Die Einbettung erfolgt auch in diesem Fall durch UV-Polymerisation eines Monomer-Ansatzes bei Temperaturen zwischen -30°C und -70°C. Sowohl für die Kryosubstitution und für die PLT-Methode, als auch für die Gefriertrocknung wurden Systeme entwickelt, in denen zum Erreichen der benötigten tiefen Temperaturen sowie zum Erzeugen eines Kryosorptions-Vakuums Flüssigstickstoff (hinfort LN2) dient. In diesen Systemen (vgl. zitierte Literatur) werden nach dem Stand der Technik die zum Trocknen der Proben vorge-sehenen Behälter entweder im Hals eines Dewargefäßes oder in dessen nach unten erweiterten Innenraum angeordnet, wobei die LN2-Kühlung im Dewarhals indirekt durch den laufend gebildeten gasförmigen Stickstoff (hinfort GN2) oder durch Wärmeableitung über zwischengeschaltete Festkörper bzw. im Innenraum des Dewargefäßes durch direkten Kontakt mit LN2 erfolgt.

Ein wesentlicher Nachteil derartiger Systeme besteht darin, daß jede dieser aufwendigen Anordnungen, welche neben dem Dewargefäß zur Aufnahme des LN2 über zumindest einen Regelkreis zur thermostatischen Regelung der Probentemperatur sowie über Kontrollsysteme zur Anzeige des LN2-Füllstandes und Warnsysteme zur Anzeige eines zu geringen LN2-Füllstandes verfügen müssen, lediglich für eine dieser Tieftemperatur-Methoden zur Trocknung gefrorener Objekte geeignet ist, welche zudem oftmals im Vergleich alternierend durchgeführt werden müssen. Man ist daher häufig gezwungen, neben einem System zur Kryosubstitution und/oder PLT-Inkubation eine ähnlich aufwendig ausgestattete Apparatur zur Gefriertrocknung zu erwerben, wenn man kompetente vergleichende Untersuchungen in diesem Bereich der Wissenschaft anstellen will.

Aufgabe der vorliegenden Erfindung ist es, eine für mehrere Verfahren geeignete Anordnung zu schaffen.

Diese Aufgabe wird erfindungsgemäß durch die im kennzeichenden Teil des Patentanspruchs 1 angegebenen Merkmale gelöst. Vorteilhafte Weiterbildungen der Erfindung sind Gegenstand der Unteransprüche.

Die Erfindung zeichnet sich dadurch aus, daß im Dewargefäß eine fest mit diesem verbundene und durch Flüssigstickstoff gekühlte ortsfeste metallische Kühlfläche angeordnet ist, und daß der in das Dewargefäß lösbar einsetzbare Probenbehälter eine zur Kühlfläche komplementäre Kontaktfläche aufweist, die bei eingesetztem Probenbehälter an der ortsfesten Kühlfläche anliegt und damit einen guten Wärmeaustausch zwischen ortsfester Kühlfläche und der zu ihr komplementären Kontaktfläche sicherstellt.

Der Dewarbehälter weist zu diesem Zweck eine vorzugsweise plane und/oder zylindrische Kühlfläche auf, die mit dem LN2 direkt oder indirekt im Kontakt steht, wobei Wärmeleitvermögen und Materialquerschnitt der Festkörperverbindung (z.B. Aluminium mit Querschnitt > 10 cm²) einen Wärmewider-stand bewirken, der auch bei minimalem LN2-Füllstand im Dewargefäß eine Temperatur der Kühlfläche gewährleistet, die nicht wesentlich (< 20°C) vom LN2-Siedepunkt (-196°C) differiert. Wie erwähnt, korrespondiert die ortsfeste Kühlfläche erfindungsgemäß mit den komplementär ausgebildeten Kontaktflächen des jeweils abnehmbaren als Substitutions-bzw. PLT- bzw. Gefriertrocknungsbehälters ausgebildeten Probenbehälters, die gegeneinander austauschbar sind und jeweils durch die komplementäre Ausbildung zur ortsfesten Kühlfläche im Dewargefäß einen guten Wärmeaustausch gewährleisten. Besonders vorteilhaft ist es, wenn die Festkörperverbindung zwischen der ortsfesten Kühlfläche im Dewargefäß und dem LN2 im Dewarinnenraum eine Röhre darstellt und die Kühlfläche eine mit dieser Röhre kommunizierende Öffnung aufweist.

Im Hinblick auf die Gefrierpunkte der üblichen Entwässerungs- bzw. Substitutionsmedien (-80°C bis -120°C) ist es vorteilhaft, den Wärmeaustausch zwischen der ortsfesten Kühlfläche im Dewargefäß und dem Substitutionsbehälter, der in der Regel bei entsprechender Temperatur-Zeit-Steuerung auch als PLT-Behälter eingesetzt werden kann, dadurch zu beschränken, daß der Kontakt und/oder der Querschnitt der metallischen Verbindung zwischen den korrespondierenden Flächen auf jene Maße beschränkt werden, die eine Temperatur im gewünschten Bereich eben gewährleisten, da andernfalls die thermostatische Beheizung dieses Substitutions-(PLT)-Behälters zu einem unnotwendig hohen LN2-Verbrauch führt. Zweckmäßig ist es daher, wenn die Unterseite des thermostatisch beheizten Substitutions-(PLT)-Behälters großteils, vorzugsweise zu mehr als 90 % durch eine vorzugsweise plane bzw. scheibenförmig ausgebildete thermisch isolierende Lage bedeckt ist, die vorzugsweise aus einem geschäumten Kunststoff, beispielsweise Styrol- oder Polyurethan-Schaum, besteht. Eine weitere Ausgestaltung der Substitutions-(PLT)-Anordnung kann darin bestehen, daß der Behälter an seiner oberen Seite eine ringförmige Nut und in seinem Zentrum eine Nachfüllöffnung für LN2 aufweist, die mit der Nachfüllöffnung der ortsfest im Dewargefäß angeordneten Kühlfläche korrespondiert, so daß im Verein mit einer hülsenförmigen Ausbildung der Kontaktfläche des Behälters durch eine zentrale Öffnung während des üblichen Betriebes LN2 in das Dewargefäß nachgefüllt werden kann. Die Vorrichtung kann dadurch weiter ausgestaltet werden, daß der Dewarhals durch einen vorzugsweise durchsichtigen und UV-durchlässigen Deckel verschließbar ist, der aus zwei Platten besteht, von denen eine an einer vertikal verschieblichen Hülse befestigt ist und bis zur Oberkante des Substitutions-(PLT)-Behälters in den Dewarhals abgesenkt werden kann, und wobei der Deckel nach Anheben dieser verschieblichen Platte horizontal zum Öffnen der Substitutionskammer verschoben werden kann. Schließlich kann zum Absaugen von giftigen Dämpfen (z.B. OsO₄-Zusatz zum Substitutionsmedium bzw. flüchtige Komponenten der Acrylmonomere für die Tieftemperatur-Einbettung), die mit dem abdampfenden GN2 aus dem Dewarhals bzw. Substitutionsraum entweichen, eine ringförmige Absaugung vorgesehen werden, welche diese Dämpfe mittels eines Exhaustors (z.B. Ventilators) über ein Rohr in einen Abzug oder ins Freie ableitet.

Gemäß einer Ausführungsform der Erfindung kann anstelle des Substitutions- (PLT) -Behälters ein evakuierbarer Einsatz zur Gefriertrocknung (hinfort GT) in den Dewarhals eingebracht werden, dessen vorzugsweise plane Bodenfläche in gleicher Weise mit der komplementären Kontaktfläche der ortsfesten Kühlfläche im Dewargefäß korrespondiert und durch diesen Kontakt auf eine Temperatur < -176°C abgekühlt wird. Hierdurch entstehen bei einer Ausbildung aus gut wärmeleitendem Metall im Inneren des Vakuumbehälters große Kondensationsflächen, die bei Bedarf noch durch (eine) zusätzliche Kondensationsfläche(n) verstärkt werden können. Wie der Substitutionsbehälter, so weist auch diese GT-Kammer einen thermostatisch beheizten Probenteller auf, die nach einem bevorzugten Merkmal der Erfindung von der gleichen elektrischen Regeleinrichtung versorgt wird.

Weitere Vorteile und Merkmale der Erfindung ergeben sich aus der nachfolgenden Beschreibung bevorzugter Ausführungsbeispiele anhand der Zeichnungen.

Fig. 1 zeigt einen schematischen Schnitt durch ein Dewargefäß, das eine bevorzugte Installation zur Aufnahme des Substitutions-(PLT)-Behälters oder einer GT-Kammer aufweist und mit einem Substitutions-(PLT)-Behälter beispielhaft bestückt ist.

Ebenfalls in einem schematischen Querschnitt zeigt

Fig. 2 einen Substitutionsbehälter ähnlich Fig. 1 mit Einsätzen zur Substitution bzw. zur PLT-Inkubation und Flacheinbettung von Proben.

Fig. 3 zeigt einen modifizierten Substitutions-(PLT)-Behälter mit einer Ringnute zur Aufnahme von Eppendorf-Röhrchen zur Substitution, PLT-Inkubation und/oder Tieftemperatur-Einbettung von Proben.

Fig. 4 zeigt beispielhaft eine einfache Gefriertrocknungskammer mit einem Rohranschluß zum Evakuieren, einen Probenteller und einer zusätzlichen Kondensationsfläche.

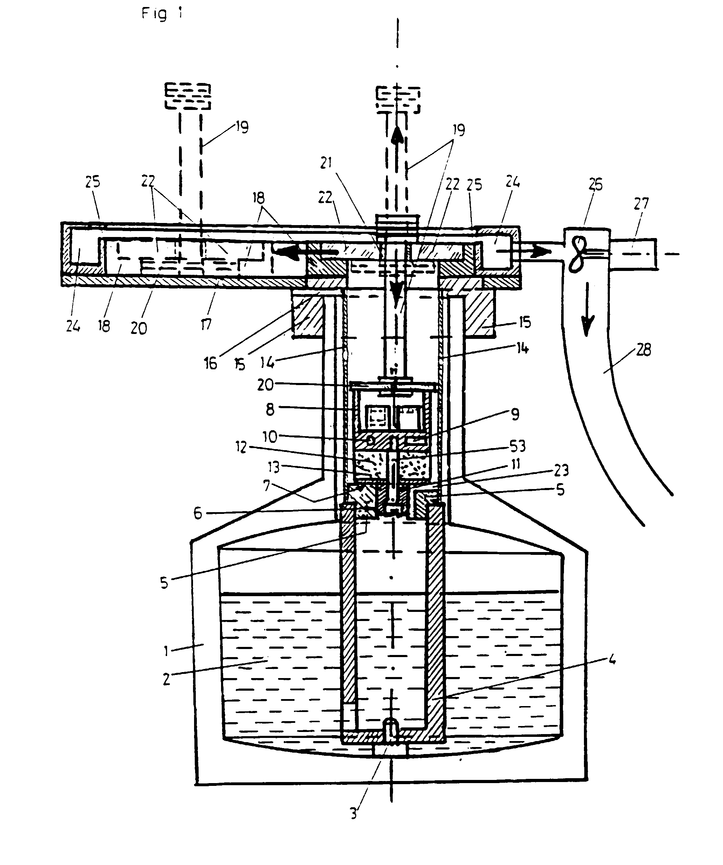

Die erfindungsgemäße Vorrichtung nach Fig. 1 besteht aus einem Dewargefäß 1 mit LN2-Füllung 2, an dessen Bodenelement 3 eine Röhre 4 aus gut wärmeleitendem Metall (z.B. Aluminium) verankert ist, welche nach oben durch einen Deckel 5 mit einer zylindrischen Ausnehmung 6 abgeschlossen wird. Röhre 4 und Deckel 5 befinden sich in einem guten Wärmekontakt zueinander. Die Zylinderfläche 6 sowie die plane Oberseite 7 des Deckels bilden die ortsfesten Kühlflächen, an denen die komplementären Kontaktflächen der Substitutionskammer 8, welche aus gut wärmeleitendem Metall besteht, und eine Heizpatrone 9 sowie einen Temperatursensor 10 (z.B. Pt100) zur thermostatischen Regelung ihrer Temperatur enthält. Im Hinblick auf die für eine Kryosubstitution bzw. PLT-Inkubation und/oder Tieftemperatur-Einbettung erforderliche Temperatur des Behälters 8 (+20°C bis minimal -120°C) ist der metallische Wärmekontakt auf den Querschnitt des Stehbolzens 53 (rund 1 cm²) beschränkt, der beispielsweise über das Element 11 und seine Zylinderfläche 11 mit der korrespondiernden Zylinderfläche 6 des Deckels 5 in gutem Wärmekontakt steht und mit der Bodenfläche des Behälters 8 ebenfalls wärmeleitend (Verschraubung) verbunden ist. Die restliche Bodenfläche des Behälters 8 ist durch eine Wärmeisolation 12 (z.B. Polyurethan-Schaum) bedeckt, deren freie Unterseite durch eine Blechplatte 13 geschützt ist. Die Röhre 4 ist über eine zylindrische Hülse 14 aus dünnwandigem Edelstahlblech (Wandstärke etwa 0,5 mm, Höhe etwa 15 cm) geringen Wärmeleitvermögens gegen den am Hals des Dewargefäßes befestigten ringförmigen Anschluß 15 abgestützt, der eine Austrittsöffnung 16 für entweichendes GN2 enthält. Am Abschlußring 15 ist eine Platte 17 befestigt, die als Gleitfläche für die Deckelfassung 18 dient: Das Verschieben erfolgt in Pfeilrichtung nach links nach Anheben der Hülse 19 mit der an ihr befestigten Platte 20, welche ihrerseits den Substitutions- bzw. Inkubationsraum des Behälters 8 während der Substitution, PLT-Inkubation und/oder Tieftemperatureinbettung verschließt. Die Hülse 19 gleitet ihrerseits in einer Hülse 21, die in der Deckelplatte 22 befestigt ist. Die Platten 20 und 22 sind vorzugsweise aus durchsichtigem und UV-durchlässigem Material ausgebildet, so daß die UV-Polymerisation von Acryl-Monomeren bei geschlossener Abdeckung gewährleistet ist. Zum Öffnen der durch die Hülse 14 im Verein mit dem Behälter 8 bzw. dem Deckel 5 gebildeten "Kammer" im Dewarhals wird die Hülse 19 mit der Platte 20 in Pfeilrichtung vertikal angehoben und anschließend der Deckel 18, 20, 22 horizontal nach links auf die Platte 17 verschoben (strichlierte Umrisse). Da die "Kammer" 5, 8, 14, 15 durch die Ausnehmung 23 im Deckel 5 stetig aus dem Rohr 4 mit GN2 gespült wird, tritt aus dem geöffneten Dewarhals Gas, das oftmals giftige Bestandteile (OSO₄ aus Substitutionsmedium, monomere Acryl-Komponenten bei Tieftemperatur-Einbettung in Acrylharz) enthält und erfindungsgemäß durch einen umlaufenden Absaugkanal 24 mit einer spaltförmigen Öffnung 25 mittels eines Exhaustors (z.B. Ventilator 26 an Welle des Motors 27) in das Entsorgungsrohr 28 gefördert wird.

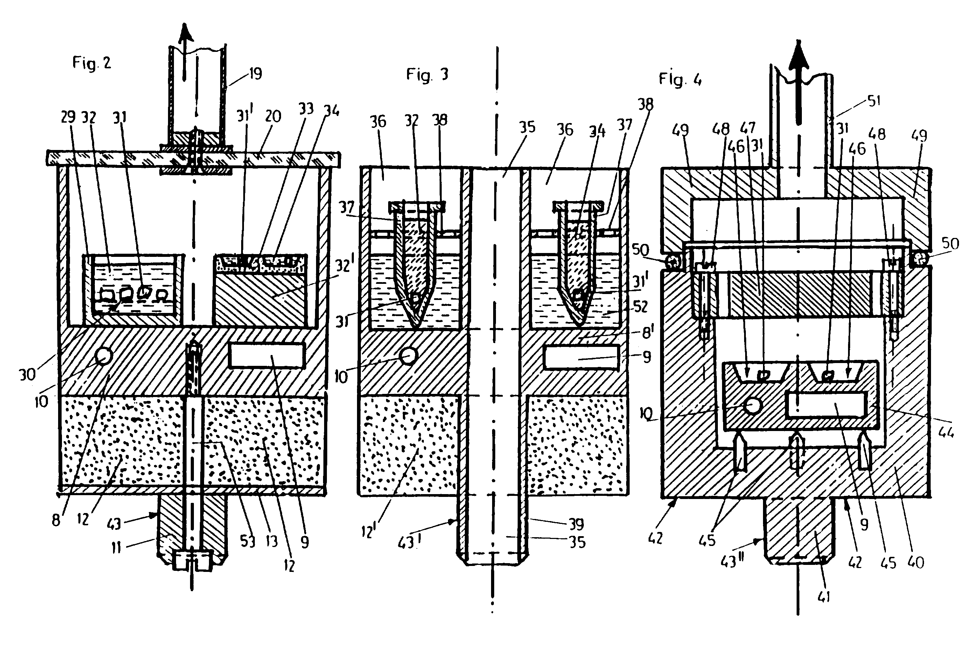

Die Fig. 2 zeigt den in der Vorrichtung nach Fig. 1 eingesetzten Substitutionsbehälter 8 im Detail. Am Substitutionsbehälter 8 ist die korrespondierende wärmeleitende Kontaktfläche mit 43 bezeichnet. Man erkennt ferner im Behälterraum einen Topf 29 mit einem Netz 30 zum Auflegen der gefrorenen Proben 31. Der Topf ist mit dem Substitutionsmedium 32 (z.B. Methanol/OsO₄) gefüllt. Zur Flacheinbettung bei tiefer Temperatur dient ein Einsatz 32', 33, dessen Abdeckplatte 33 aus antiadhäsivem Kunststoff (z.B. Azetalharz) besteht und Mulden zur Aufnahme der wasserfreien Proben 31' sowie des Kunstharzmonomers 34 aufweist (vgl. hiezu zitierte Patentschriften sowie Fachliteratur). Ein unreproduzierbares Verdampfen und Entweichen einzelner Komponenten aus den Medien 32, 34 wird durch den Verschluß mit der Platte 20 in der bereits beschriebenen erfindungsgemäßen Weise verhindert.

Die Fig. 3 zeigt eine alternative Ausgestaltung des Substitutions-(PLT)-Behälters. Der Behälter 8' weist einen Zentralkanal 35 zum Nachfüllen von LN2 auf. Die Aufnahme der Proben 31 erfolgt in einer Ringnute 36 des Behälters 8', beispielsweise in Eppendorf-Röhrchen 37, welche durch ein perforiertes Blech 38 in Position gehalten werden und ihrerseits zur Aufnahme der Proben 31,31' sowie der Medien 32,34 dienen. Der Wärmekontakt zwischen der Wandung der Ringnute 36 und den Oberflächen der Eppendorf-Röhrchen 37 wird in diesem Fall in bekannter Weise durch eine Flüssigkeit 52 (z.B. Alkohol) gewährleistet. Der Wärmekontakt zur zylindrischen Oberfläche 6 in der Deckelplatte 5 erfolgt über den hülsenförmigen Fortsatz 39 des Substitutionsbehälters 8', und zwar über die Kontaktfläche 43'.

Die Fig. 4 zeigt eine GT-Kammer, deren Unterteil 40 mit dem zylindrischen Fortsatz 41 über die plane Bodenfläche 42 sowie die Zylinderfläche 43" mit den komplementären Flächen 7 und 6 des Deckels 5 auf der Röhre 4 im Dewargefäß 1 (Fig. 1) korrespondiert und daher eine Temperatur im Bereich < - 176°C erreicht. Im Kammerunterteil 40 befindet sich der Probenteller 44 auf einer Halterung (z.B. Spitzenauflagen 45), welche den Wärmeübergang 40 - 44 minimiert. Der Probenteller 44 ist durch eine Heizpatrone 9 und einen Temperatursensor 10 thermostatisch beheizt und weist an seiner Oberseite Mulden 46 zur Aufnahme der gefrorenen Proben 31 auf. Die Kühlfläche kann im Bedarfsfall durch die Kondensations-(Kryosorptions-)Platte 47 erhöht werden, welche an dem Unterteil 40 mit den Schrauben 48 befestigt und gut wärmeleitend verbunden ist. Der Unterteil 40 ist mit dem Oberteil 49 der Kammer über einen Dichtungsring 50 vakuumdicht verbunden. Die Kammer kann über den Absaugstutzen 51 am Oberteil 49 evakuiert werden (Pfeil). Die anhand der Fig. 1 bis 4 beschriebenen Anordnung kann im Rahmen der Erfindung in verschiedenen Variationen und Kombinationen verwirklicht werden. Es ist unerheblich, welche Einsätze in den Substitutions-(PLT)-Behältern 8, 8', 36 bzw. 36 zur Aufnahme der Proben 31, 31' und Medien 32, 34 vorgesehen werden sowie in welcher Weise die Temperatur thermostatisch geregelt wird. Unerheblich ist ferner die Realisierung des erforderlichen Wärmewiderstandes zwischen dem Substitutionsbehälter 8, 8' und der ortsfesten Kühlfläche 6 bzw. 7 am Deckel 5. Ebenso ist es unerheblich, auf welche Art das Vakuum für die Gefriertrocknung (z.B. rotierende Pumpe, Membranpumpe oder Kryosorption mittels Molekularsieb) hergestellt wird und wie die GT-Kammer abgedichtet wird, solange vor allem das Merkmal der wechselweisen Austauschbarkeit eines Substitutions-(PLT)-Behälters gegen einen anderen bzw. gegen eine GT-Kammer und umgekehrt aufgrund korrespondierender komplementärer Wärmeaustauschflächen in der beschriebenen und dargestellten Weise verwirklicht wird.

## Patentansprüche

1. Vorrichtung zur Entwässerung und/oder Einbettung von Proben (31,31'), insbesondere bei Temperaturen zwischen +20°C und -120°C, in einem Substitutionsbehälter (8,8') mit thermostatisch geregelter Temperatur (9,10) in einem Flüssigstickstoff (2) enthaltenden Dewargefäß (1), wobei im Dewargefäß (1) eine fest mit diesem verbundene und durch Flüssigstickstoff (2) gekühlte ortsfeste metallische Kühlfläche (6,7) angeordnet, der Substitutionsbehälter (8) mit der Kühlfläche (6,7) verbunden ist und der Substitutionsbehälter (8) Einsätze (29,33) für die Proben (31,31') aufweist, dadurch gekennzeichnet, daß zwischen dem Substitutionsbehälter (8) und der Kühlfläche (6,7) eine komplementäre Kontaktfläche (42,43,43',43") vorgesehen ist, über die der für die PLT-Methode geeignete Substitutionsbehälter (8) lösbar von der Kühlfläche (6,7) ausgebildet ist, wobei die Kontaktfläche (42,43,43',43") bei eingesetztem Substitutionsbehälter (8) an der Kühlfläche (6,7) anliegt und damit einen guten Wärmeaustausch zwischen der ortsfesten Kühlfläche (6,7) und der zu ihr komplementären Kontaktfläche (42,43,43',43") sicherstellt und der Substitutionsbehälter (8) zusammen mit den Einsätzen (29,33) gegen einen anderen Substitutionsbehälter (8') mit einem Einsatz (37) oder einen evakuierbaren Behälter (40) mit einer Gefriertrockungskammer und einem Einsatz (44) austauschbar ist.

2. Vorrichtung nach Anspruch 1, dadurch gekennzeichnet, daß der Substitutionsbehälter (8,8') zur Aufnahme von flüssigen Substitutions- oder Entwässerungsmedien bzw. Monomeren ausgebildet ist.

3. Vorrichtung nach einem der Ansprüche 1 bis 2, dadurch gekennzeichnet, daß im Dewargefäß (1) eine Röhre (4) aus gut wärmeleitendem Metall (3) befestigt ist, deren oberes Ende als Deckel (5) mit einer Nachfüllöffnung (6) für Flüssigstickstoff (2) versehen ist, wobei die vorzugsweise plane waagrechte Oberseite (7) des Deckels (5) und/oder die zylindrische Nachfüllöffnung (6) die Kühlflächen zum Abkühlen der Behälter (8, 8', 40) darstellen.

4. Vorrichtung nach einem der Ansprüche 1 bis 3, dadurch gekennzeichnet, daß der im wesentlichen zylindrisch ausgebildete Substitutions-(PLT)-Behälter (8,8') aus einem thermostatisch beheizbaren Gefäß besteht, dessen Unterseite großteils, vorzugsweise zu mehr als 90%, durch eine plane thermisch isolierende Lage (12,12') bedeckt ist.

5. Vorrichtung nach Anspruch 4, dadurch gekennzeichnet, daß die thermisch isolierende Lage (12,12') aus einem geschäumten Kunststoff, beispielsweise Styrol- oder Polyurethan-Schaum, besteht.

6. Vorrichtung nach Anspruch 4 oder 5, dadurch gekennzeichnet, daß die plane Unterseite der thermisch isolierenden Lage (12) mit einer Metallscheibe (13) bedeckt ist.

7. Vorrichtung nach Anspruch 6, dadurch gekennzeichnet, daß sich zwischen dem Substitutionsbehälter (8,8') und dem Deckel (5) ein zylindrischer Stab (53) oder eine zylindrische Hülse (39) befindet, der bzw. die mit beiden Elementen (8,8',5,11) einen guten Wärmekontakt aufweist.

8. Vorrichtung nach Anspruch 3, dadurch gekennzeichnet, daß der Substitutionsbehälter (8') zur Aufnahme der Probenbehälter (37) mit den Proben (31,31') an seiner oberen Seite eine ringförmige Nut (36) und in seinem Zentrum eine Nachfüllöffnung (35) für Flüssigstickstoff (2) aufweist, die mit der Nachfüllöffnung (6) im Deckel (5) korrespondiert.

9. Vorrichtung nach einem der Ansprüche 1 bis 8, dadurch gekennzeichnet, daß der Hals des Dewargefäßes (1) durch einen Deckel (18,20,22) verschlossen werden kann, der horizontal bewegbar ist und seinerseits zwei Platten (22,20) aufweist, von denen die untere (20) einen Durchmesser aufweist, der es zuläßt, daß sie vertikal im Dewarhals auf- und abbewegbar ist.

10. Vorrichtung nach Anspruch 9, dadurch gekennzeichnet, daß die beiden Platten (20,22) aus einem durchsichtigen Material bestehen, das vorzugsweise UV-durchlässig ist.

11. Vorrichtung nach einem der Ansprüche 1 bis 10, dadurch gekennzeichnet, daß am oberen Ende des Dewarhalses eine ringförmige Absaugung (24,25) angeordnet ist, welche das aus dem Dewarinneren entweichende Gas aufnimmt und mittels eines Exhaustors (26,27) durch ein Rohr (28) ableitet.

12. Vorrichtung nach Anspruch 1, dadurch gekennzeichnet, daß der evakuierbare Behälter (40, 49-51) mit der Gefriertrocknungskammer zylindrisch ausgebildet ist, wobei die Bodenfläche (42,43") mit dem Deckel (5) in einer Weise korrespondiert, daß durch eine komplementäre Ausbildung der Flächen (7/42 und 6/43") ein guter Wärmeaustausch zwischen den beiden korrespondierenden Flächen gewährleistet ist.

13. Vorrichtung nach Anspruch 12, dadurch gekennzeichnet, daß sowohl die thermostatisch beheizte Probenhalterung (9,10,44), als auch die Kondensationsflächen (40,47) ausschließlich mittels Flüssigstickstoff (2) über metallische Zwischenglieder (4,5) auf die jeweils erforderlichen Temperaturen abgekühlt werden.

## Claims

1. Device for dehydrating and/or embedding samples (31, 31'), in particular at temperatures between +20°C and -120°C, in a substitution container (8, 8') with thermostatically controlled temperature (9, 10) in a Dewar vessel (1) containing liquid nitrogen (2), there being arranged in the Dewar vessel (1) a fixed metal cooling surface (6, 7), which is securely connected to the said vessel and is cooled by liquid nitrogen (2), the substitution container (8) being connected to the cooling surface (6, 7) and the substitution container (8) having inserts (29, 33) for the samples (31, 31'), characterized in that between the substitution container (8) and the cooling surface (6, 7) there is provided a complementary contact surface (42, 43, 43', 43"), by means of which the substitution container (8), which is suitable for the PLT method, is designed such that it is detachable from the cooling surface (6, 7), the contact surface (42, 43, 43', 43") bearing against the cooling surface (6, 7) when the substitution container (8) is inserted, and consequently ensuring a good heat transfer between the fixed cooling surface (6, 7) and the contact surface (42, 43, 43', 43") complementary to it, and the substitution container (8) being exchangeable together with the inserts (29, 33) for another substitution container (8') with an insert (37) or for an evacuable container (40) with a freeze-drying chamber and an insert (44).

2. Device according to Claim 1, characterized in that the substitution container (8, 8') is designed for receiving liquid substitution or dehydration media or monomers.

3. Device according to either of Claims 1 and 2, characterized in that in the Dewar vessel (1) there is fastened a tube (4) of a metal (3) which conducts heat well, the upper end of which, as a cover (5), is provided with a refilling opening (6) for liquid nitrogen (2), the preferably planar horizontal upper side (7) of the cover (5) and/or the cylindrical refilling opening (6) representing the cooling surfaces for cooling the containers (8, 8', 40).

4. Device according to one of Claims 1 to 3, characterized in that the essentially cylindrically designed substitution (PLT) container (8, 8') comprises a thermostatically heatable vessel, a large part of the underside of which, preferably over 90%, is covered by a planar thermally insulating layer (12, 12').

5. Device according to Claim 4, characterized in that the thermally insulating layer (12, 12') consists of a foam plastic, for example styrene or polyurethane foam.

6. Device according to Claim 4 or 5, characterized in that the planar underside of the thermally insulating layer (12) is covered by a metal disc (13).

7. Device according to Claim 6, characterized in that between the substitution container (8, 8') and the cover (5) there is a cylindrical rod (53) or a cylindrical sleeve (39), which rod or sleeve has good thermal contact with both elements (8, 8', 5, 11).

8. Device according to Claim 3, characterized in that the substitution container (8') has for receiving the sample containers (37) with the samples (31, 31') on its upper side an annular groove (36) and in its centre a refilling opening (35) for liquid nitrogen (2), which corresponds to the refilling opening (6) in the cover (5).

9. Device according to one of Claims 1 to 8, characterized in that the neck of the Dewar vessel (1) may be closed by a cover (18, 20, 22), which is horizontally moveable and has for its part two plates (22, 20), of which the lower plate (20) has a diameter which allows it to be vertically moveable up and down in the neck of the Dewar vessel.

10. Device according to Claim 9, characterized in that the two plates (20, 22) consist of a transparent material, which is preferably UV-transmissive.

11. Device according to one of Claims 1 to 10, characterized in that at the upper end of the neck of the Dewar vessel there is arranged an annular suction removal means (24, 25), which receives the gas escaping from the interior of the Dewar vessel and leads it away by means of an exhaustor (26, 27) through a tube (28).

12. Device according to Claim 1, characterized in that the evacuable container (40, 49-51) with the freeze-drying chamber is cylindrically designed, the bottom surface (42, 43") corresponding to the cover (5) in such a way that a good heat transfer between the two corresponding surfaces is ensured by a complementary design of the surfaces (7/42 and 6/43").

13. Device according to Claim 12, characterized in that both the thermostatically heated sample holding device (9, 10, 44) and the condensation surfaces (40, 47) are cooled to the respectively required temperatures exclusively by means of liquid nitrogen (2) via metal intermediate elements (4, 5).

## Revendications

1. Dispositif pour la déshydratation et/ou l'enrobage d'échantillons (31, 31'), en particulier à des températures comprises entre +20°C et -120°C, dans un réservoir de substitution (8, 8') avec régulation thermostatique de la température (9, 10), dans un vase de Dewar (1) contenant de l'azote liquide (2), dans lequel une surface de refroidissement (6, 7) métallique fixe, refroidie par l'azote liquide (2) et fixée au vase de Dewar (1) est disposée dans celui-ci, le réservoir de substitution (8) est lié à la surface de refroidissement (6,7) et le réservoir de substitution (8) présente des bacs (29, 33) pour les échantillons (31, 31'), caractérisé en ce qu'il est prévu, entre le réservoir de substitution (8) et la surface de refroidissement (6, 7), une surface de contact complémentaire (42, 43, 43', 43"), par laquelle le réservoir de substitution (8) convenant pour la méthode PLT est rendu séparable de la surface de refroidissement (6, 7), la surface de contact (42, 43, 43', 43") étant appliquée sur la surface de refroidissement (6, 7) lorsque le réservoir de substitution (8) est engagé et assurant ainsi un bon échange de chaleur entre la surface de refroidissement fixe (6, 7) et la surface de contact (42, 43, 43', 43") qui lui est complémentaire, et le réservoir de substitution (8) avec les bacs (29, 33) pouvant être échangé contre un autre réservoir de substitution (8') avec un bac (37) ou un réservoir sous vide (40) avec une chambre de cryodessiccation et un bac (44).

2. Dispositif suivant la revendication 1, caractérisé en ce que le réservoir de substitution (8, 8') est conçu pour recevoir des agents liquides de substitution ou de déshydratation, respectivement des monomères liquides.

3. Dispositif suivant l'une quelconque des revendications 1 à 2, caractérisé en ce que, dans le vase de Dewar (1), est fixé un tube (4) en un métal bon conducteur de la chaleur (3), dont l'extrémité supérieure formant le couvercle (5) est pourvue d'une ouverture de remplissage (6) pour l'azote liquide (2), dans lequel la face supérieure horizontale (7), de préférence plane, du couvercle (5) et/ou l'ouverture de remplissage cylindrique (6) constituent les surfaces de refroidissement pour le refroidissement des réservoirs (8, 8', 40).

4. Dispositif suivant l'une quelconque des revendications 1 à 3, caractérisé en ce que le réservoir (PLT) de substitution (8, 8') de forme essentiellement cylindrique se compose d'un récipient à chauffage thermostatique, dont la face inférieure est, pour la plus grande partie, de préférence à plus de 90 %, couverte par une couche d'isolation thermique plane (12, 12').

5. Dispositif suivant la revendication 4, caractérisé en ce que la couche d'isolation thermique (12, 12') se compose d'une matière plastique expansée, par exemple de mousse de styrol ou de polyuréthane.

6. Dispositif suivant la revendication 4 ou 5, caractérisé en ce que la face inférieure plane de la couche d'isolation thermique (12, 12') est couverte d'une feuille de métal (13).

7. Dispositif suivant la revendication 6, caractérisé en ce qu'il se trouve, entre le réservoir de substitution (8, 8') et le couvercle (5), une barre cylindrique (53) ou une douille cylindrique (39), qui présente un bon contact thermique avec les deux éléments (8, 8', 5, 11).

8. Dispositif suivant la revendication 3, caractérisé en ce que le réservoir de substitution (8') présente dans sa face supérieure une rainure annulaire (36) pour recevoir les porte-échantillons (37) avec les échantillons (31, 31') et en son centre une ouverture de remplissage (35) pour l'azote liquide (2), qui correspond à l'ouverture de remplissage (6) dans le couvercle (5).

9. Dispositif suivant l'une quelconque des revendications 1 à 8, caractérisé en ce que le col du vase de Dewar (1) peut être fermé par un couvercle (18, 20, 22), qui est mobile horizontalement et qui présente à son tour deux plaques (22, 20), la plaque inférieure (20) présentant un diamètre qui permet de la déplacer verticalement dans le col du vase de Dewar.

10. Dispositif suivant la revendication 9, caractérisé en ce que les deux plaques (20, 22) sont constituées d'une matière transparente, qui est de préférence perméable aux UV.

11. Dispositif suivant l'une quelconque des revendications 1 à 10, caractérisé en ce qu'à l'extrémité supérieure du col du vase de Dewar est disposée une aspiration annulaire (24, 25), qui capte le gaz s'échappant de l'intérieur du vase de Dewar et le dévie par un extracteur (26, 27) à travers un tuyau (28).

12. Dispositif suivant la revendication 1, caractérisé en ce que le réservoir sous vide (40, 49-51) avec la chambre de cryodessiccation est de forme cylindrique, la surface du fond (42, 43") correspondant avec le couvercle (5), d'une façon telle qu'un bon échange de chaleur entre les deux surfaces correspondantes soit garanti par une constitution complémentaire des surfaces (7/42 et 6/43").

13. Dispositif suivant la revendication 12, caractérisé en ce qu'aussi bien le porte-échantillons (9, 10, 44) à chauffage thermostatique que les surfaces de condensation (40, 47) sont refroidis aux températures respectives nécessaires exclusivement au moyen d'azote liquide (2), via des éléments métalliques intermédiaires (4, 5).
